# EUROPEAN PATENT APPLICATION

(11) **EP 4 098 666 A1**
(43) Date of publication of application: **07.12.2022**
(21) Application number: 20916461.5
(22) Date of filing: 29.01.2020
(51) Int. Cl.: C08F 8/40, C08F 8/18, C08F 8/46, C08C 19/24, C08C 19/12, C08C 19/34, C08F 136/04, C08L 9/00

(54) **METHOD FOR PRODUCING MODIFIED POLYDIENES (VARIANTS)**

(71) Applicant: Public Joint Stock Company "Sibur Holding" (PJSC "Sibur Holding"), Tyumen Region, g. Tobolsk, 626150 (RU)
(72) Inventor: IARTSEVA, Tatiana Aleksandrovna, g. Voronezh, 394033 (RU); LAGUNOVA, Svetlana Alekseevna, g. Voronezh, 394029 (RU); TKACHEV, Aleksei Vladimirovich, g. Voronezh, 394042 (RU)
(74) Representative: ABG Intellectual Property Law, S.L.
(86) International application number: PCT/RU2020/000043
(87) International publication number: WO 2021/154113

(57) **Abstract**

The invention relates to the production of synthetic polymers used in the manufacture of tires and tire parts, golf balls and other industrial rubber goods. In particular, the present invention relates to methods for producing a modified polydiene by catalytic polymerization of a conjugated diene in an organic solvent, wherein the catalytic system used includes a lanthanide compound, an organoaluminum compound, a conjugated diene, and a halogen-containing component, followed by post-polymerization modification with at least one phosphorus-nitrogen compound the chemical structure of which is based on repeating (-P=N-)ₙ units, where n is an integer from 3 to 24. The technical result of the invention is the obtaining a modified stereoregular polydiene characterized by a narrow molecular weight distribution, good processability in the composition of rubber compounds, a low rolling resistance, and a low wearability.

## Description

### Field of the invention

The invention relates to the production of synthetic polymers used in the manufacture of tires and tire parts, golf balls and other industrial rubber goods.

In particular, the present invention relates to methods for producing a modified polydiene by catalytic polymerization of a conjugated diene in an organic solvent, wherein the catalytic system used includes a lanthanide compound, an organoaluminum compound, a conjugated diene, and a halogen-containing component, followed by post-polymerization modification with at least one phosphorus-nitrogen compound the chemical structure of which is based on repeating (-P=N-)ₙ units, where n is an integer from 3 to 24.

### Prior art

Phosphazenes are compounds containing a phosphorus-nitrogen double bond. The phosphazene family includes both pentavalent phosphorus compounds of the general formula R₃P=NR and trivalent phosphorus derivatives RP=NR The phosphazene fragment is also a structural unit of (R₂P=N-)ₙ compounds of cyclic (cyclophosphazenes) and framework structures, as well as polyphosphazenes.

The best known applications of phosphazene compounds are medicine (thromboresistant or biodegradable films and coatings, drug carriers, modifiers of dental materials), they are used also as solid polyelectrolytes and for creating sensible (smart) polymers.

Organic derivatives of phosphazenes containing epoxy groups are used as modifiers for epoxy resins to improve physical and mechanical properties (brittleness), to increase fire resistance and to reduce flammability ("Modifiers of epoxy oligomers based on cyclic chlorophosphazenes". Advances in Chemistry and Chemical Technology. Volume XXVIII. 2014 No. 3, pp. 11-14).

WO2015019945 describes a grafted phosphazene-containing copolymer and a thermoplastic composition based thereon. A rubber graft-copolymer comprising a rubber-like polymerized portion and a portion of graft-polymerization, wherein the rubber graft-copolymer contains units derived from a phosphazene derivative having a polymerizable functional group as an essential constitutive unit.

The graft copolymer described above is a branched copolymer in which the main chain consists of units of one monomer and one or more side chains formed from another monomer are attached to it. Obtaining such a copolymer is a complicated multistep process. At present, there are no methods to accurately predict properties of the resulting graft-copolymers; most works in this area are purely empirical.

JP 2011084647 proposes a rubber composition for tires which is obtained by mixing 100 parts by weight of a rubber containing at least 50 wt.% of styrene-butadiene rubber, 10-30 parts by weight of a phosphazene compound, and 5-95 parts by weight of silicon dioxide.

However, this approach implies a high consumption of an expensive phosphazene compound in the manufacture of the rubber composition.

Anionic polymerization in the presence of phosphazene bases in benzene on a lithium catalyst is known. The homopolymers thus obtained are characterized by a high molecular weight and a low polydispersity. Phosphazene basic groups significantly improve nucleophilicity of the initiator (chain end) due to complex formation with a counter-ion (proton or lithium cation), leading to rapid and uncontrolled anionic polymerization (Konstantinos Ntetsikas, Yahya Alzahrany and others. Anionic Polymerization of Styrene and 1,3-Butadiene in the Presence of Phosphazene Superbases, Polymers 2017, No. 9, p. 538).

The closest with respect to technical features and the result achieved is a method of molecular weight increasing of elastomers, disclosed in GB1247795. The method described in the said application includes obtaining (co)polymers of dienes and vinylaromatic compounds in the presence of a catalyst on the basis of an alkali metal or its hydrocarbyl derivative and reacting for at least one minute the resulting (co)polymer with phosphazene of the formula (PNCl₂)n, where n is 3 or 4, wherein said phosphazene is used in an amount of 0.01-100 mmoles per 100 parts of elastomer and wherein said reaction is carried out until at least 15% increase in the molecular weight of said elastomer is observed.

However, anionic polymerization does not enable obtaining polydienes with a high content of 1,4*-cis* units, thus, the resulting rubbers based on these polymers are characterized by a high rolling resistance, which negatively affects the behavior of finished tires on roads.

### Disclosure of Invention

The objective of the present invention is to obtain a polymer with improved technological characteristics and processability in the composition of rubber compounds, as well as with a low rolling resistance for reducing fuel consumption.

The essence of the present invention is to obtain a modified polydiene by polymerization of a conjugated diene in an organic solvent using a catalytic system containing a lanthanide compound, an organoaluminum compound, a conjugated diene, and a halogen-containing component, followed by post-polymerization modification with phosphorus-nitrogen compound and, optionally, at least one co-modifier selected from the group consisting of a maleinized polybutadiene and a halogen-containing compound.

In one embodiment of the invention the post-polymerization modification is carried out using at least one phosphorus-nitrogen compound the chemical structure of which is based on repeating (-P=N-)ₙ units, where n is an integer from 3 to 24.

In another embodiment of the invention the post-polymerization modification is performed using at least one phosphorus-nitrogen compound the chemical structure of which is based on repeating (-P=N-)ₙ units, where n is an integer from 3 to 24 and at least one low molecular weight maleinized polybutadiene (hereinafter MPB).

In the third embodiment of the invention the post-polymerization modification is performed using at least one phosphorus-nitrogen compound the chemical structure of which is based on repeating (-P=N-)ₙ units, where n is an integer from 3 to 24 and at least one halogen-containing compound.

The present invention relates also to a modified polydiene containing groups (-P=N-)ₙ, where n is an integer from 3 to 24 and obtained by any of the proposed methods.

In one more aspect the present invention relates also to rubber compositions obtained on the basis of the modified diene according to the invention.

The technical result of the invention is the obtaining a modified stereoregular polydiene characterized by a narrow molecular weight distribution, good processability in the composition of rubber compounds, low rolling resistance, and low wearability.

In all embodiments of the present invention, for obtaining a modified polydiene at least one phosphorus-nitrogen compound is used the chemical structure of which is based on repeating (-P=N-)ₙ units, where n is an integer from 3 to 24, preferably n is an integer from 3 to 10, most preferably 3 or 4.

According to the IUPAC nomenclature chemical compounds of this formula are called phosphazenes. The present method can use commercially available compounds or phosphazenes synthesized in laboratory.

As a compound from the group of phosphazenes, at least one of the following compounds may be used without limitation:
2,2,4,4,6,6-hexachloro-1,3,5-triaza-2,4,6-triphosphinine;
2,4,6-trichloro-2,4,6-triphenoxycyclotriphosphazene;
1,1-diphenyl-3,3,5,5-tetramethylaminotriphosphonitrile;
2,2,4,4-tetrachloro-6,6-dimethylmercaptocyclotriphosphazatriene;
ethyloxypentafluorocyclotriphosphazene;
(trifluoroetoxy)pentachlorocyclotriphosphazene;
hexafluorocyclotriphosphazene;
4,4,6,6-tetrachloro-1,3,5,-triaza-2,4,6-triphosphocyclohexa-1,3,5-trien-2,2-diamine;
2,4,6-trichloro-2,4,6-trifluoro-1,3,5-triaza-2λ5,4λ5,6λ5-triphosphacyclohexa-1,3,5-trien;
2,4,6-trichloro-2,4,6-tri(phenoxy)-1,3,5-triphosphinine;
trinitride diamide tetrachloride trichloride;
octachlorocyclotetrapfosphazene;
1,1-dimethyl-3,3,5,5-tetrachlorocyclotriphosphazene;
2,2,4,4-tetrachloro-6-isopropyl-2λ5,4λ5,6λ5-[1,3,5,2,4,6]triazatriphosphinine;
1-methyl-1,3,3,5,5 -pentachlorocyclotriphosphazene;
1,3,5,2,4,6-triazatriphosphinine;
2,4,6-tribromo-2,4,6-trifluoro polymeric dialdehyde;
4,6-difluoro-2-N,N-2,2-N'2-N',4-N,4-N,N-6,6-N-octamethyl-1,3,5-triaza-2λ5,4λ5,6λ5-triphosphacyclohexa-1,3,5-trien-2,2,4,6-tetramine;
2,2,4,4,6,6-hexahydro-2,2,4,4,6,6-hexapropoxy-1,2,3,4,5,6-triazatriphosphinine;
1,1-diphenyl-3,3,5,5-tetramethylaminotriphosphonitrile and others, and mixtures thereof.

In a preferred embodiment chlorine-containing phosphazenes with 2 to 8 chlorine atoms and molecular weight from 250 to 500 g/mole are used.

Most preferably, 2,2,4,4,6,6-hexachloro-1,3,5-triaza-2,4,6-triphosphinine; 2,4,6-trichloro-2,4,6-triphenoxycyclotriphosphazene; 1,1-diphenyl-3,3,5,5-tetramethylaminotriphosphonitrile; 2,2,4,4-tetrachloro-6,6-dimethylmercaptocyclotriphosphazatriene; ethyloxypentafluorocyclotriphosphazene; (trifluoroetoxy)-pentachlorocyclotriphosphazene; hexafluorocyclotriphosphazene; 4,4,6,6-tetrachloro-1,3,5-triaza-2,4,6-triphosphocyclohexa-1,3,5-trien-2,2-diamine, 2,4,6,6-tetrachloro-1,3,5-triaza-2,4,6-trifluoroocyclohexa-2,4-diphenoxytriphosphazene, (trifluoroetoxy)-pentachlorocyclotriphosphazene, 2,2,4,4,6,6,8,8-octachloro-1,3,5,8-tetraaza-2,4,6,8-tetraphosphinine, 2,4,6,6-tetrachloro-1,3,5-triaza-2,4-diphenoxytriphosphazene, 2,2,4,4,6,6,8,8-octachloro-1,3,5,8-tetraaza-2,4,6,8-tetraphosphinine or mixtures thereof are used.

All of the compounds mentioned above provide the achievement of said technical result without any deviations, the preferred options for phosphazenes are proposed in view of commercial availability of these phosphorus-nitrogen compounds.

The dosage of the introduced modifier phosphazene depends on the required level of properties of the final product (polymer Mooney viscosity of the polymer and the rubber compound obtained from it, the area under the relaxation curve, polydispersity). According to the present invention the amount of phosphazene introduced is not less than 0.5 mole per 1 mole of lanthanide. Reducing the dosage to less than 0.5 mol of phosphazene per 1 mole of lanthanide does not improve properties of the polymer and the rubber, respectively. Preferably, the amount of phosphazene introduced is from 0.5 to 15.0 mole per 1 mole of lanthanide. Increasing the dosage above 15.0 mole does not improve properties of the polymer and the rubber, thus overspending an expensive modifier.

It is preferable to use from 1.0 to 10.0 mole of phosphazene per 1 mole of lanthanide.

The most preferred interval is from 1.0 to 5.0 mole, since this dosage of phosphazene makes it possible to achieve the optimal level of properties of polymer and rubber obtained from it at a relatively low modifier consumption, which avoids an unreasonable increase in the cost of the final product.

Phosphazenes as modifiers can be used not only alone, but also together with other compounds (co-modifiers). For the purpose of the present invention it was found that the use of phosphazenes together with low molecular weight maleinized polybutadienes (hereinafter MPB) or halogen-containing compounds leads to optimal results. The consumption of phosphazene is reduced due to the use of another modifier (co-modifier), while the positive effect achieved remains unchanged.

MPB represents an adduct of maleic anhydride and polybutadiene containing from 4 to 24 wt.% anhydride groups, based on the total mass of maleinized polybutadiene, and having a molecular weight from 1200 to 15000 g/mole. Polybutadienes with a molecular weight higher 15000 g/mole do not belong to low molecular weight MPBs, whereas MPBs with molecular weight less than 1200 g/mole do not currently exist. The content of anhydride groups is indicated with respect to currently available MPB, however, the content of anhydride groups of more than 24 wt.% is theoretically acceptable.

It is preferred to use MPBs containing from 4 to 20 wt.% anhydride groups and having molecular weight from 1200 to 8000 g/mole.

In the most preferred embodiment, MPBs containing from 5 to 13 wt.% anhydride groups and having a molecular weight from 2500 to 5500 g/mol are used.

Dosages of the jointly used modifiers are also calculated per 1 mole of lanthanide, the molar ratio of phosphazene : MPB : lanthanide is (1.0-5.0): (0.5-5): 1, more preferably (1.0-5.0):(0.5-2):1, most preferably (1.0-5.0):(0.5-1.0):1. Reducing the dosages of MPB and phosphazene below indicated values does not improve properties of the polymer, and, therefore, is not advisable. An increase in the dosages of MPB and phosphazene leads to a significant increase in Mooney viscosity and polydispersity index.

According to the present invention, halogen-containing compounds used in the step of post-polymerization modification as the co-modifiers correspond to formula ElR₄₋ₙHalₙ, where n = 2-4, element El represents tin, silicon or germanium, R is methyl, ethyl, propyl, butyl, isopropyl, isobutyl, tert-butyl, phenyl, allyl or other organic radical, Hal is fluorine, chlorine, bromine, iodine. It is also possible to use sulfur or phosphorus halides. Tin or silicon compounds or mixtures thereof are preferred. Particularly preferable are tin tetrachloride, methyltin trichloride, ethyltin trichloride, buthyltin trichloride, silicon tetrachloride, germanium tetrachloride, trichloromethyl silane, dichlormethyl silane, trichlorethylsilane, and dichloroethylsilane. Most preferable halogen-containing compound in the step of post-polymerization modification is tin tetrachloride, methyltin trichloride, silicon tetrachloride, germanium tetrachloride or trichloromethylsilane.

Dosages of modifiers in this embodiment of the invention are also calculated per 1 mole of lanthanide, the molar ratio phosphazene: halogen-containing compound (in terms of halogen): lanthanide lies in the range of (1.0-5.0):(3.0-20.0):1, preferably (1.0-5.0):(4.0-15.0):1, most preferably (1.0-5.0):(5.0-10.0):1. Reducing dosages of modifiers does not improve properties of the polymer, and an increase in the dosage has the opposite effect leading to a deterioration in the polymer properties, namely, it causes a sharp increase in Mooney viscosity, which negatively affects the plasto-elastic properties, and this causes problems with polymer isolation and processing.

To form the catalytic complex according to the invention, compounds containing at least one lanthanide atom can be used as lanthanide compounds such as lanthanum, neodymium, cerium, praseodymium, promethium, samarium, europium, gadolinium, terbium, dysprosium, holmium, erbium, thulium, ytterbium, lutetium. It is preferable to use neodymium or gadolinium compounds.

Lanthanide-containing compounds can be selected, without limitations, from carboxylates, organophosphates, organophosphonates, organophosphinates, carbamates, dithiocarbamates, xanthates, β-diketonates, halides, oxyhalides or alcoholates.

Neodymium carboxylates include neodymium formate, neodymium acetate, neodymium acrylate, neodymium methacrylate, neodymium valerate, neodymium gluconate, neodymium citrate, neodymium fumarate, neodymium lactate, neodymium maleate, neodymium oxalate, neodymium 2-ethylhexanoate, neodymium neodecanoate (trade name neodymium versatate), neodymium naphthenate, neodymium stearate, neodymium oleate, neodymium benzoate and neodymium picolinate.

Neodymium organophosphates include neodymium dibutyl phosphate, neodymium diphenyl phosphate, neodymium dihexyl phosphate, neodymium diheptyl phosphate, neodymium dioctyl phosphate, neodymium bis-(1-methylheptyl)phosphate, neodymium bis-(2-ethylhexyl)phosphate, neodymium didecyl phosphate, neodymium dodecyl phosphate, neodymium dioctadecyl phosphate, neodymium bis-(n-nonylphenyl) phosphate, neodymium butyl (2-ethylhexyl) phosphate, neodymium (1-methylphenyl)(2-ethylhexyl) phosphate, and neodymium (2-ethylhexyl)(n-nonylphenyl) phosphate.

Neodymium organophosphonates include neodymium butylphosphonate, neodymium pentylphosphonate, neodymium hexylphosphonate, neodymium heptylphosphonate, neodymium octylphosphonate, neodymium (1-methylheptyl)phosphonate, neodymium (2-ethylhexyl)phosphonate, neodymium decylphosphonate, neodymium dodecylphosphonate, neodymium octadecylphosphonate, neodymium oleylphosphonate, neodymium phenylphosphonate, neodymium (n-nonylphenyl)phosphonate, neodymium butyl(butylphosphonate), neodymium pentyl(pentylphosphonate), neodymium hexyl(hexylphosphonate), neodymium heptyl(heptylphosphonate), neodymium octyl(octylphosphonate), neodymium (1-methylheptyl)(1-methylheptyl)phosphonate, neodymium (2-ethylhexyl)(2-ethylhexyl)phosphonate, neodymium decyl(decylphosphonate), neodymium dodecyl(dodecylphosphonate), neodymium octadecyl(octadecylphosphonate), neodymium oleyl(oleylphosphonate), neodymium phenyl(phenylphosphonate), neodymium (n-nonylphenyl)((n-nonylphenyl)phosphonate), neodymium buthyl((2-ethylhexyl)phosphonate), neodymium (2-ethylhexyl)(buthylphosphonate), neodymium (1-methylheptyl)((2-ethylhexyl)phosphonate), neodymium (2-ethylhexyl)((1-methylheptyl)phosphonate), neodymium (2-ethylhexyl)((n-nonylphenyl)phosphonate), and neodymium (n-nonylphenyl)((2-ethylhexyl)phosphonate).

Neodymium organophosphinates includes neodymium buthylphosphinate, neodymium pentylphosphinate, neodymium hexylphosphinate, neodymium heptylphosphinate, neodymium octylphosphinate, neodymium (1-methylheptyl)phosphinate, neodymium (2-ethylhexyl)phosphinate, neodymium decylphosphinate, neodymium dodecylphosphinate, neodymium octadecylphosphinate, neodymium oleylphosphinate, neodymium phenylphosphinate, neodymium (n-nonylphenyl)phosphinate, neodymium dibuthylphosphinate, neodymium dipentylphosphinate, neodymium dihexylphosphinate, neodymium diheptylphosphinate, neodymium dioctylphosphinate, neodymium bis(1-methylheptyl)phosphinate, neodymium bis(2-ethylhexyl)phosphinate, neodymium tris--[bis(2-ethylhexyl)phosphinate], neodymium didecylphosphinate, neodymium didodecylphosphinate, neodymium dioctadecylphosphinate, neodymium dioleylphosphinate, neodymium diphenylphosphinate, neodymium bis(n-nonylphenyl)phosphinate, neodymiuma buthyl(2-ethylhexyl)phosphinate, neodymium (1-methylheptyl)(2-ethylhexyl)phosphinate, and neodymium (2-ethylhexyl)(n-nonylphenyl)phosphinate.

Most preferably, carboxylate of neo-acids are used. Structurally, neo-acids contain a fragment of a trialkylcarboxylic acid (branched α,α'-carboxylic acid). Derivatives of neo-acids that are more soluble in hydrocarbon solvents are alkylated faster and more completely, which leads to more active catalytic compounds.

It is also preferable to use neodymium tris-[bis(2-ethylhexyl)phosphate], neodymium neodecanoate, neodymium tris-[(2-ethyl)hexanoate], gadolinium versatate, and praseodymium versatate as the lanthanide compound.

Preferably, neodymium carboxylates, phosphates, most preferably neodymium neodecanoate, neodymium tris-[bis-(2-ethylhexyl)phosphate] are used.

As organoaluminium compound in the method according to invention trialkylaluminium, triphenylaluminium or dialkylaluminium hydrides, alkylaluminium dihydrides or theire mixtures can be used, in particular trimethylaluminium, triethylaluminium, tri-n-propylaluminium, triisopropylaluminium, tri-n-buthylaluminium, triisobuthylaluminium, tri-tert-buthylaluminium, triphenylaluminium, trihexylaluminium, tricyclohexylaluminium, trioctylaluminium, diethylaluminium hydride, di-n-propylaluminium hydride, di-n-buthylaluminium hydride, diisobuthylaluminium hydride, dihexylaluminium hydride, diisohexylaluminium hydride, dioctylaluminium hydride, diisooctylaluminium hydride, phenyl ethyl aluminium hydride, phenyl-n-propylaluminium hydride, phenylisopropylaluminium hydride, phenyl-n-buthylaluminium hydride, phenylisobuthylaluminium hydride, benzylethylaluminium hydride, benzyl-n-buthylaluminium hydride, benzylisobuthylaluminium hydride, benzylisopropylaluminium hydride etc, or mixtures thereof.

Preferable is the use of alkylaluminums or alkylaluminum hydrides or mixtures thereof.

Particularly preferable is the use of triethylaluminium, triisobuthylaluminium, diisobuthylaluminium hydride or mixtures thereof, most preferred is diisobuthylaluminium hydride.

As conjugated dienes in the method according to the invention the following compounds are used: 1,3-butadiene, isoprene, 2,3-dimethyl-1,3-butadiene, 1,3-pentadiene (piperilene), 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-buthyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene, 2-methyl-3- 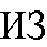 opropyl-1,3-butadiene.

Particularly preferable conjugated dienes are 1,3-butadiene, isoprene, piperilene, most preferable is 1,3-butadiene.

As a halogen-containing component is the composition of the catalytic system are used: dimethylaluminium chloride, diethylaluminium chloride, diisobuthylaluminium chloride, dimethylaluminium bromide, diethylaluminium bromide, diisobuthylaluminium bromide, dimethylaluminium fluoride, diethylaluminium fluoride, diisobuthylaluminium fluoride, dimethylaluminium iodide, diethylaluminium iodide, diisobuthylaluminium iodide, methylaluminium dichloride, ethylaluminium dichloride, methylaluminium dibromide, ethylaluminium dibromide, methylaluminium difluoride, ethylaluminium difluoride, methylaluminium sesquichloride, ethylaluminium sesquichloride, isobuthylaluminium sesquichloride, as well trimethyltin chloride, trimethyltin bromide, triethyltin chloride, triethyltin bromide, di-tert-buthyltin dichloride, di-tert-buthyltin dibromide, dibuthyltin dichloride, dibuthyltin dibromide, tributhyltin chloride, tributhyltin bromide etc.

Preferably, ethylaluminum sesquichloride, ethylaluminum dichloride, diethylaluminum iodide or diethylaluminum chloride are used as the halogen-containing component, particularly preferably ethylaluminum sesquichloride, diethylaluminum iodide or diethylaluminum chloride.

In accordance with the present invention, a catalytic system comprising (A) a lanthanide compound, (B) an organoaluminum compound, (C) a conjugated diene, and (D) a halogen-containing component taken in a molar ratio (A):(B):(C):(D) equal to 1:(8-30):(5-30):(1.5-3.0) is used to carry out the polymerization.

The preferred molar ratio of the components of the catalytic system is (A):(B):(C):(D) = 1:(8-20):(5-20):(1.8-2.8).

The most preferred molar ratio of the components of the catalytic system is (A):(B):(C):(D) = 1:(10-15):(10-15):(2.1-2.5).

The solvent for polymerization is an inert organic solvent, which can be used individually or in the form of mixtures of aliphatic hydrocarbons, in particular such as butane, pentane, hexane, heptane; alicyclic hydrocarbons, namely cyclopentane, cyclohexane; monoolefins, such as 1-butene, 2-butene, or mixtures thereof; aromatic hydrocarbons, in particular benzene, toluene, xylene.

According to the proposed method, it is most preferable to use a hydrocarbon solvent as a solvent, which is a mixture of cyclohexane with hexane or cyclohexane with nefras (industrial hexane-heptane fraction of paraffinic hydrocarbons from dearomatized catalytic reforming gasolines with boiling range of 65-75°C, GOST 26977-84) at a ratio (30-55) : (70-45).

Polydiene can be produced in a batch or continuous mode in a hydrocarbon solvent, by supplying into the reactor or autoclave a hydrocarbon feedstock consisting of a monomer, a solvent, and a catalytic complex preliminary mixed with the solvent and containing a lanthanide compound, an organoaluminum compound, a conjugated diene and a halogen-containing component. Usually, the monomer concentration in the solvent can be 7-15 wt.%, preferably 9-13 wt.%. The polymerization process is carried out at a temperature of 40-80°C.

The polymerization time can vary from 1.5 to 2 hours. The monomer conversion reaches 95-99%.

Upon reaching 95% monomer conversion, a test sample is taken, and into the remaining polymerizate a modifier is fed which is at least one compound selected from the phosphazene group. The resulting polymerizate is stirred during the period from 5 minutes to 4 hours at 60-90°C. Phosphazene interacts with the polymer at the active ends of its chain.

In embodiments using phosphazenes together with other compounds, the modification can be performed by introducing the modifiers into the polymerizate either in series, or simultaneously, or by conducting a parallel modification with one and the other compound followed by mixing the polymerizates.

Sequential modification can be carried out as follows: upon reaching 95% monomer conversion, a test sample is taken and into the remaining polymerizate a modifier is fed which is at least one compound selected from the phosphazene group. The resulting mixture is stirred during the period from 5 minutes to 2 hours at 60-90°C, then the second modifier is added which is a MPB or a halogen-containing compound, and stirring continues for another 5 minutes to 2 hours at 60-90°C. The order in which the modifiers are introduced may be inverse: first MPB or a halogen-containing compound is fed and then phosphazene.

Parallel modification can be carried out as follows: upon reaching 95% monomer conversion, a test sample is taken and the remaining polymerizate is divided into 2 parts (flow ratio (5-95)- (95-5) wt/%). At least one compound selected from the phosphazene group is added to one part, modification time being from 5 minutes to 2 hours at 60-90°C. In the other part MPB or phosphorus-nitrogen compound is added, modification time being from 5 minutes to 2 hours at 60-90°C. Then the both flows are mixed together, averages in reboiler/mixer/reactor during 15 to 60 minutes at 60-90°C.

The total modification time in all embodiments of the invention can be from 5 minutes to 4 hours, preferably from 20 minutes to 1 hour.

At a modification temperature below 60°C an increase in polymer viscosity is observed, which is undesirable because this will inevitably cause problems during polymer isolation and processing. At the same time, terminal groups of the polymer chain tend to lose their activity at temperatures above 90°C. Therefore, it is impossible to achieve a high degree of modification of the polymer.

After modification completion, the polymerizate can be stabilized with an antioxidant solution of phenolic type, taken in an amount of from 0.2 to 0.4 wt.% of polymer, in addition, water-steam degassing can be carried out.

Rubber obtained according to the invention has a Mooney viscosity from 37 to 45 before modification and from 40 to 66 after modification, the polydispersity index of the resulting polydienes lies in the range from 2.16 to 2.6, the content of 1,4-cis units is 96.0-98.0%.

Rubber compounds based on the obtained polydienes are prepared according to standard compositions presented in Table 3 and are characterized by a low Mooney values of rubber compounds, an improved rolling resistance (elastic-hysteresis properties) and a reduced wearability.

### Embodiments of the Invention

Now the invention will be elucidated by several exemplary embodiments. As will be evident to the skilled person, the invention is not limited to the presented examples and the same effect can be achieved in other variants that are within the scope of the claimed invention.

The following describes the test methods used to evaluate the properties of the polymers obtained by the claimed method.
1. The conversion degree was determined gravimetrically by precipitating the polymer from the polymerizate with ethyl alcohol, drying the isolated polymer, weighing and calculating the mass fraction of the polymer in the polymerizate.
2. Molecular weight characteristics of rubbers were determined by gel permeation chromatography according to Applicant's own procedure using a Breeze gel chromatograph (Waters) with a refractometric detector. Rubber samples were dissolved in freshly distilled tetrahydrofurane, the mass concentration of the polymer in the solution was 2 mg/ml, common calibration according to polystyrene standards was used. The calculation was carried out using the Mark-Kuhn-Houwink constant for polydiene (K = 0.000457, α = 0.693). Determination conditions:
   - set of 4 high-resolution columns (300 mm length, 7.8 mm diameter) filled with styrofoam, HR3, HR4, HR5, HR6, allowing to analyze polymers with molecular weight from 500 to 1^{∗}10⁷ AMU;
   - solvent: tetrahydrofurane, flowrate 1 cm³/min;
   - temperature of column thermostat and refractometer 300°C.
3. Mooney viscosity was measured according to ASTM D 1646.
4. The elastic component of the complex shear storage modulus G' (kPa), which makes it possible to evaluate the distribution of the filler in rubber compounds, was determined using RPA-2000 rubber recyclability analyzer by Alpha Technologies at 0.1 Hz and 100°C within the deformation range from 1% to 450%. The difference of storage moduli at strain amplitude 1% and 50%, ΔG' = (G'1% - G'43%) represents the Payne effect.
5. Wear resistance during sliding on the renewable surface was evaluated according to GOST 23509 (method B) on ABRASION CHECK abrasimeter, "Gibitre Instruments".

### Example 1 (comparative, without modification)

A catalytic system including neodymium neodecanoate (NdV₃), butadiene (BD), diisobutylaluminum hydride (DIBAH), a halogen-containing compound ethylaluminum sesquichloride (EASC) was prepared in an aliphatic solvent consisting of a mixture of cyclohexane and nefras at mass ratio of 70/30. The molar ratio of components in the catalytic complex is BD:Nd:DIBAH:EASC=10:1:10:2.3. The maturation time of the complex is 22 hours at 25°C.

800 g 1,3-butadiene and 6700 ml of solvent representing a mixture of cyclohexane and nefras at a mass ratio 70/30 are fed into the 10 1 reactor equipped with a stirrer and a jacket for heat removal, all this is heated to 40-50°C, then 100 ml of the catalytic system is introduced. Polymerization process is performed at 60°C for 1 hour, monomer conversion is 95%.

The polymer is discharged from the reactor and a nonstaining phenol-type antioxidant is introduced. Mass percentage of the antioxidant is 0.2%. Then the polymer is degassed and dried on rollers, the physico-mechanical and molecular-weight characteristics are determined (Table 1).

### Example 2

Similar to example 1, except that catalytic system used includes neodymium tris-[bis(2-ethylhexyl)phosphate] (NdP₃), butadiene (BD), diisobuthylaluminium hydride (DIBAH), ethylaluminium sesquichloride (EASC). The ratio of components in the catalytic complex is BD:Nd:DIBAH:EASC =10:1:10:2.7. The maturation time of the complex is 22 hours at 25°C.

Upon reaching 95% monomer conversion, 2 kg of the polymerizate are taken in order to analyze and compare the characteristics of unmodified and modified polymers. An antioxidant is introduced into the sampled polymerizate, all this is degassed and dried on rollers. Then physico-mechanical properties and molecular-weight characteristics are determined.

2,2,4,4,6,6-Hexachloro-1,3,5-triaza-2,4,6-triphosphinine (HCP) is introduced in the remaining part of the polymerizate, the amount of the modifier is 2.0 mole per 1 mole of neodymium. The modification process is carried out with constant stirring for 60 min at 60°C. Then a nonstaining phenol-type antioxidant is introduced. The mass percentage of the antioxidant is 0.2%. Then the polymer is degassed and dried on rollers, and physico-mechanical and molecular-weight characteristics are determined (Table 1).

### Example 3

Similar to Example 2, except that the catalytic system contains neodymium neodecanoate (NdV₃) as a lanthanide compound. The polymer obtained with Mooney viscosity 43.9 is tested in ASTM composition (Table 3 - Composition of rubber compounds (ASTM)), the results of this sample testing are presented in Table 4.

### Example 4

Similar to example 3, except that the catalytic system contains diethylaluminium chloride (DEAC) as the halogen-containing component. The amount of DEAC is 0.5 mole per 1 mole of neodymium. The characteristics of the sample obtained are presented in Table 1.

### Example 5

Similar to example 4, except that the catalytic system contains neodymium tris-[(2-ethyl)hexanoate] (NdEh₃) as a lanthanide compound. 1,1-Diphenyl-3,3,5,5-tetramethylamino-triphosphonitrile (DDP) is used as modifier, the amount is 9.0 mole per 1 mole of neodymium. The characteristics of the sample obtained are presented in Table 1.

### Example 6

Similar to example 4, except that the catalytic system contains NdP₃ as a lanthanide compound and hexafluorocyclotriphosphazene (HFP) as a modifier, the amount of the modifier is 15.0 mole per 1 mole of neodymium. The characteristics of the sample obtained are presented in Table 1.

### Example 7

Similar to example 4, except that for preparing catalytic system EASC is used as a halogen-containing component, and hexafluorocyclotriphosphazene (HFP) as a modifier, the amount of the modifier is 5,0 mole per 1 mole of neodymium. The characteristics of the sample obtained are presented in Table 1.

### Example 8

Similar to example 6, except that ethyl oxypentafluorocyclotriphosphazene (EPFP) is used as a modifier, the amount of the modifier is 5.0 mole per 1 mole of neodymium. The characteristics of the sample obtained are presented in Table 1.

### Example 9

Similar to example 7, except that 2,4,6-trichloro-2,4,6-triphenoxycyclotriphosphazene (TCP) is used as a modifier, the amount of the modifier is 6.0 mole per 1 mole of neodymium. The characteristics of the sample obtained are presented in Table 1. The resulting polymer with Mooney viscosity 40.0 is tested in ASTM composition, the results of this sample testing are presented in Table 4.

### Example 10

Similar to example 2, except that 2,4,6-trichloro-2,4,6-triphenoxycyclotriphosphazene (TCP) is used as a modifier, the amount of the modifier is 7,0 mole per 1 mole of neodymium. The characteristics of the sample obtained are presented in Table 1. The resulting polymer with Mooney viscosity 48.6 is tested in ASTM composition, the results of this sample testing are presented in Table 4.

### Example 11

Similar to example 7, except that 4,4,6,6-tetrachloro-1,3,5,-triaza-2,4,6-triphosphocyclohexa-1,3,5-trien-2,2-diamine (TCDAP) is used as a modifier, the amount of the modifier is 0.5 mole per 1 mole of neodymium. The characteristics of the sample obtained are presented in Table 1.

### Example 12

Similar to example 11, except that the catalytic system contains DEAC as a halogen-containing component, and the amount of 4,4,6,6-tetrachloro-1,3,5-triaza-2,4,6-triphosphocyclohexa-1,3,5-trien-2,2-diamine (TCDAP) is 4.0 mole per 1 mole of neodymium. The characteristics of the sample obtained are presented in Table 1.

### Example 13

Similar to example 12, except that the catalytic system contains gadolinium versatate as a lanthanide compound and (trifluoroetoxy)pentachlorocyclotriphosphazene (TFPCP) as a modifier, in an amount of 0.8 mole per 1 mole of gadolinium. The characteristics of the sample obtained are presented in Table 1.

### Example 14

Similar to example 11, except that the catalytic system contains NdP₃ as a lanthanide compound and 2,2,4,4-tetrachloro-6,6-dimethylmercaptocyclotriphosphazatriene (CMP) as a modifier, in an amount of 3.0 mole per 1 mole of neodymium. The characteristics of the sample obtained are presented in Table 1.

### Example 15

Similar to example 14, except that the catalytic system contains NdV₃ as a lanthanide compound, DEAC as a halogen-containing component and 2,2,4,4-tetrachloro-6,6-dimethylmercaptocyclo-triphosphazatriene (CMP) as a modifier in an amount of 2.0 mole per 1 mole of neodymium. The characteristics of the sample obtained are presented in Table 1.

### Example 16

Similar to example 14, except that the catalytic system contains praseodymium versatate (PrV₃) as a lanthanide compound, diethylaluminium iodide (DEAI) as a chlorinating agent, and HFP as modifier in an amount of 1.0 mole per 1 mole of praseodymium. The characteristics of the sample obtained are presented in Table 1.

### Example 17

Similar to example 11, except that 2,4,6-trichloro-2,4,6-triphenoxycyclotriphosphazene (TCP) is used as a modifier in an amount of 12.0 mole per 1 mole of neodymium. The characteristics of the sample obtained are presented in Table 1. The resulting polymer with Mooney viscosity 45.8 is tested in the ASTM composition, the results of this sample testing are presented in Table 4.

### Example 18 (comparative)

Similar to example 2, except that another approach is used for modification performing, namely sequential addition of modifiers. First, modifier No. 1 (2,4,6-trichloro-2,4,6-triphenoxycyclotriphosphazene (TCP)) is introduced in a molar ratio 0.5 mole per 1 mole of neodymium, 15 minutes later modifier No. 2 (maleinized polybutadiene, molecular weight 3100 (MPB-3100), and MA content 10%) is introduced through the metering device in an amount of 0.9 mole per 1 mole of neodymium. The resulting polymer with Mooney viscosity 42.4 (Table 2) is tested in the ASTM composition, the results of this sample testing are presented in Table 4.

### Example 19

Similar to example 18, except that the amount of modifier No 1 is 1.2 mole, and the modifier No 2 (maleinized polybutadiene, molecular weight 3100 (MPB-3100), and MA content 10%) is introduced in an amount of 5.0 mole per 1 mole of neodymium. The characteristics of the sample obtained are presented in Table 2.

### Example 20 (comparative)

Similar to example 19, except that modifier No. 1 (2,2,4,4,6,6-hexachloro-1,3,5-triaza-2,4,6-triphosphinine (TCP)) is used in an amount of 0.5 mole per 1 mole of neodymium, and 15 minutes later modifier No. 2 (maleinized polybutadiene, molecular weight 2700 (MPB-2700), MA content 10%) is introduced through the metering device in an amount of 3.0 mole per 1 mole of neodymium. The characteristics of the sample obtained are presented in Table 2.

### Example 21 (comparative)

Similar to example 19, except that DEAC is used as a halogen-containing component, 2,2,4,4,6,6-hexachloro-1,3,5-triaza-2,4,6-triphosphinine (HCP) as modifier No. 1 in an amount of 1.5 mole per 1 mole of neodymium, maleinized polybutadiene with molar weight 5500 (MPB-5500) and MA content 13% as a modifier No. 2 in an amount of 0.4 mole per 1 mole of neodymium. The order of modifier introduction is inversed: first, modifier No. 2 is introduced and 15 minutes later modifier No. 1 is introduced through the metering device. The resulting polymer with Mooney viscosity 44.6 (Table 2) is tested in the ASTM composition, the results of this sample testing are presented in Table 4.

### Example 22

Similar to example 19, except that DEAC is used as a halogen-containing component, 2,2,4,4,6,6-hexachloro-1,3,5-triaza-2,4,6-triphosphinine (HCP) as modifier No. 1 in an amount of 1.3 mole per 1 mole of neodymium, and 15 minutes later modifier No. 2 is introduced through the metering device, namely maleinized polybutadiene with molecular weight 5500 (MPB-5500) and MA content 13%, in an amount of 1,5 mole per 1 mole of neodymium. The characteristics of the sample obtained are presented in Table 2.

### Example 23 (comparative)

Similar to example 20, except that the catalytic system is prepared on the basis of gadolinium versatate, modifier No 1 is 2,4,6-trichloro-2,4,6-triphenoxycyclotriphosphazene (TCP) used in an amount of 2.0 mole per 1 mole of gadolinium, and 15 later modifier No. 2 is introduced through the metering device, namely maleinized polybutadiene with molecular weight 2700 (MPB-2700) and MA content 8%, in an amount of 6.5 mole per 1 mole of gadolinium. The resulting polymer with Mooney viscosity 45.7 (Table 2) is tested in the ASTM composition, the results of this sample testing are presented in Table 4.

### Example 24

Similar to example 18, except that a double-flow polymerization algorithm is used. According to this algorithm, synthesis is carried out under identical conditions in two reactors, when 95% conversion is reached, in the first reactor modifier No. 1 (2,2,4,4-tetrachloro-6,6-dimethylmercaptocyclo-triphosphazatriene (CMP) is added in an amount of 2.5 mole per 1 mole of neodymium at 80°C, modification time 15 min, whereas in the second reactor modifier No. 2 (tin tetrachloride) is added in an amount of 15.0 mole, expressed in chlorine, per 1 mole of neodymium at 80°C, modification time 15 min. Then the two flows are stirred together for 30 minutes in a reactor equipped with a stirrer. The ratio of flows in reactors 1 and 2 is 50:50 by weight. The characteristics of the sample obtained are shown in Table 2.

### Example 25

Similar to example 22, except that modifier No.1 (4,4,6,6-tetrachloro-1,3,5-triaza-2,4,6-triphosphocyclohexa-1,3,5-trien-2,2-diamine (TCDAP)) is added to flow 1 in an amount of 1.5 mole per 1 mole of neodymium, and modifier No. 2 (silicon tetrachloride) is introduced into the second flow in an amount of 7.0 mole, expressed in chlorine, per 1 mole of neodymium. The ratio of reaction flows 1 and 2 is 30:70 by weight. The characteristics of the sample obtained are presented in Table 2.

### Example 26

Similar to example 22, except that the catalytic system is prepared on the basis of neodymium versatate (NdV₃), as a chlorinating agent of the catalytic system dibuthylaluminium chloride (DBAC) is used, modifier No. 1 is 2,4,6,6-tetrachloro-1,3,5-triaza-2,4,6-trifluoroocyclohexa-2,4-diphenoxytriphosphazene (TCDPP) used in an amount of 1.0 mole per 1 mole of neodymium, the modification is carried out at 75°C, modifier No. 2 is silicon tetrachloride used in an amount of 10 mole, expressed in chlorine, per 1 mole of neodymium, the modification is carried out at 75°C. Then the two flows are stirred together for 30 minutes in a reactor equipped with a stirrer. The ratio of reaction flows 1 and 2 is 50:50 by weight. The characteristics of the sample obtained are shown in Table 2.

### Example 27

Similar to example 22, except that the catalytic system is prepared on the basis of gadolinium tris-[(2-ethyl)hexanoate] (GdEh₃), as a chlorinating agent of the catalytic system buthylaluminium dichloride (BADC) is used, modifier No. 1 is 2,4,6,6-tetrachloro-1,3,5-triaza-2,4,-diphenoxytriphosphazene (TCDPP) used in an amount of 4.0 mole per 1 mole of gadolinium, the modification is carried out at 85°C, modifier No 2 is methyltrichlorosilane used in an amount of 9 mole, expressed in chlorine, per 1 mole of gadolinium, the modification is carried out at 85°C. Then the two flows are stirred together for 30 minutes in a reactor equipped with a stirrer. The ratio of reaction flows 1 and 2 is 50:50 by weight. The characteristics of the sample obtained are shown in Table 2.

### Example 28

Similar to example 22, except that the catalytic system is prepared on the basis of neodymium versatate (NdV₃), as a chlorinating agent of the catalytic system diethylaluminiumchloride (DEAC) is used, modifier No. 1 is 2,4,6,6-tetrachloro-1,3,5-triaza-2,4,6-trifluoroocyclohexa-2,4-diphenoxytriphosphazene (TCDPP) used in an amount of 4.0 mole per 1 mole of neodymium, the modification is carried out at 65°C, modifier No. 2 is methyltrichloro stannane used in an amount of 4 mole expressed in chlorine per 1 mole of neodymium, the modification is carried out at 65°C. Then the two flows are stirred together for 40 minutes in a reactor equipped with a stirrer. The ratio of reaction flows 1 and 2 is 50:50 by weight. The characteristics of the sample obtained are shown in Table 2.

### Example 29

Similar to example 22, except that the catalytic system is prepared on the basis of gadolinium versatate (GdV₃), as a chlorinating agent of the catalytic system diethylaluminium iodide (DEAI) is used, modifier No. 1 is (trifluoroetoxy)pentachlorocyclotriphosphazene (TFPCP) used in an amount of 0.5 mole per 1 mole of gadolinium, the modification is carried out at 90°C, modifier No. 2 is methyltintrichloride used in an amount of 9 mole, expressed in chlorine, per 1 mole of gadolinium, the modification is carried out at 90°C. Then the two flows are stirred together for 20 minutes in a reactor equipped with a stirrer. The ratio of reaction flows 1 and 2 is 50:50 by weight. The characteristics of the sample obtained are shown in Table 2.

### Example 30

Similar to example 20, except that the catalytic system is prepared on the basis of neodymium naphthenate (NdNah₃), EASC is used as a halogen-containing component, modifier No. 1 is 2,4,6,6-tetrachloro-1,3,5-triaza-2,4-diphenoxytriphosphazene (TCDPP) used in an amount of 5.0 mole per 1 mole of neodymium, 15 minutes later modifier No. 2 (maleinized polybutadiene, molecular weight 3100 (MPB-3100), MA content 7%) is introduced through the metering device in an amount of 0.7 mole per 1 mole of neodymium. The modification temperature is 80°C. The resulting polymer with Mooney viscosity 45.7 (Table 2) is tested in the ASTM composition, the results of this sample testing are presented in Table 2.

### Example 31

Similar to example 20, except that the catalytic system is prepared on the basis of neodymium tris-[(2-ethyl)hexanoate] (NdEh₃), DEAC is used as a halogen-containing component, modifier No. 1 is 2,2,4,4-tetrachloro-6,6-dimethylmercaptocyclo-triphosphazatriene (CMP) used in an amount of 2.0 mole per 1 mole of neodymium, 15 minutes later modifier No. 2, germanium tetrachloride, is introduced in an amount of 12 mole, expressed in chlorine, per 1 mole of neodymium. The results of this sample testing are presented in Table 2.

### Example 32

Similar to example 20, except that the catalytic system is prepared on the basis of gadolinium versatate (GdV₃), DEAC is used as a halogen-containing component, modifier No. 1 is 2,2,4,4,6,6,8,8-octachloro-1,3,5,8-tetraaza-2,4,6,8-tetraphosphinine (OCTP) used in an amount of 4.0 mole per 1 mole of gadolinium, 15 minutes later modifier No. 2, methyltin trichloride is introduced in an amount of 20 mole, expressed in chlorine, per 1 mole of gadolinium. The results of this sample testing are presented in Table 2.

### Example 33

Similar to example 20, except that the catalytic system is prepared on the basis of neodymium versatate (NdV₃), EASC is used as a halogen-containing component, modifier No. 1 is 2,2,4,4,6,6-hexachloro-1,3,5-triaza-2,4,6-triphosphinine (HCP) used in an amount of 3.0 mole per 1 mole of neodymium, 15 minutes later modifier No. 2, tin tetrachloride, is introduced in an amount of 8 mole, expressed in chlorine, per 1 mole of neodymium. The results of this sample testing are presented in Table 2.

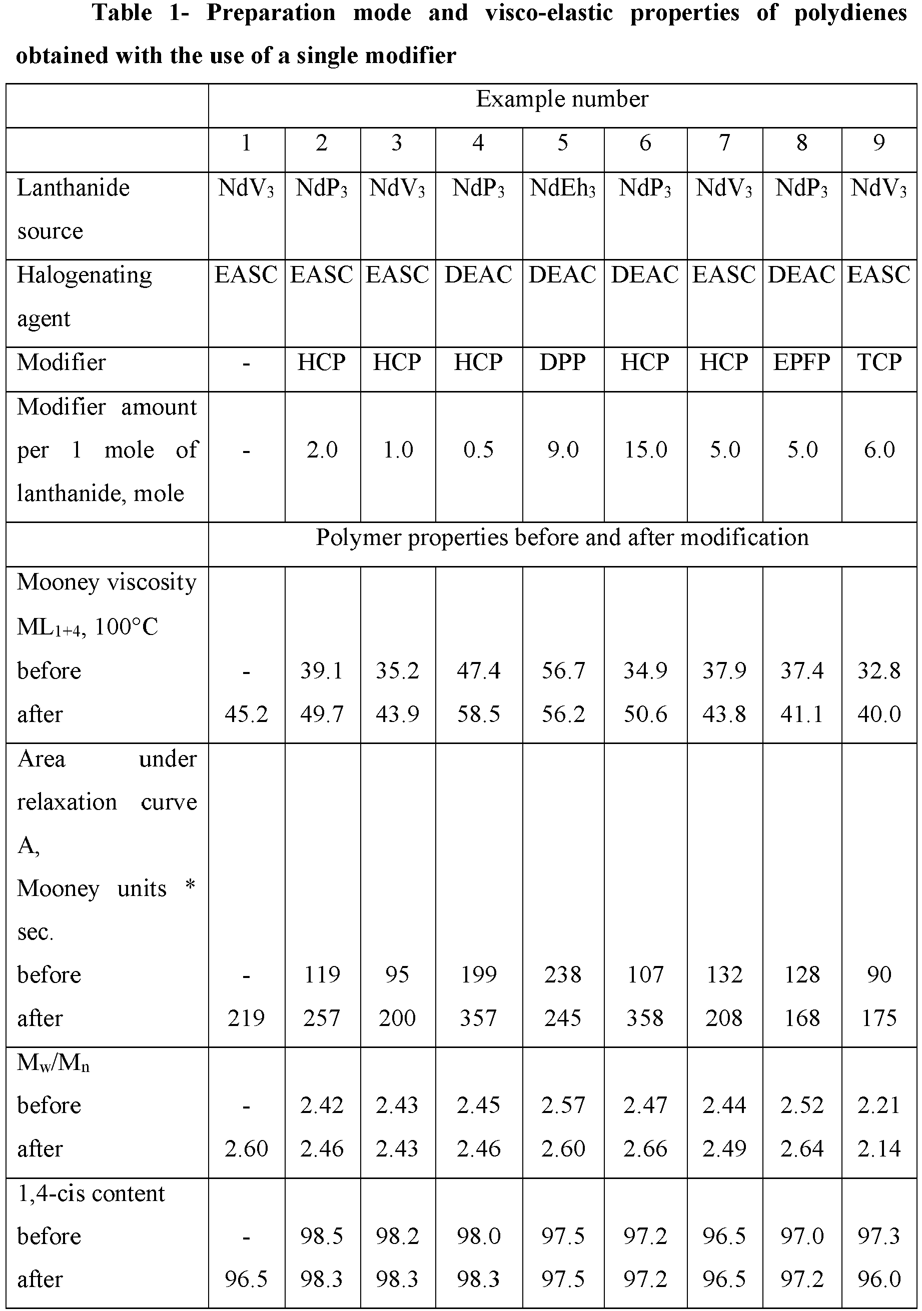

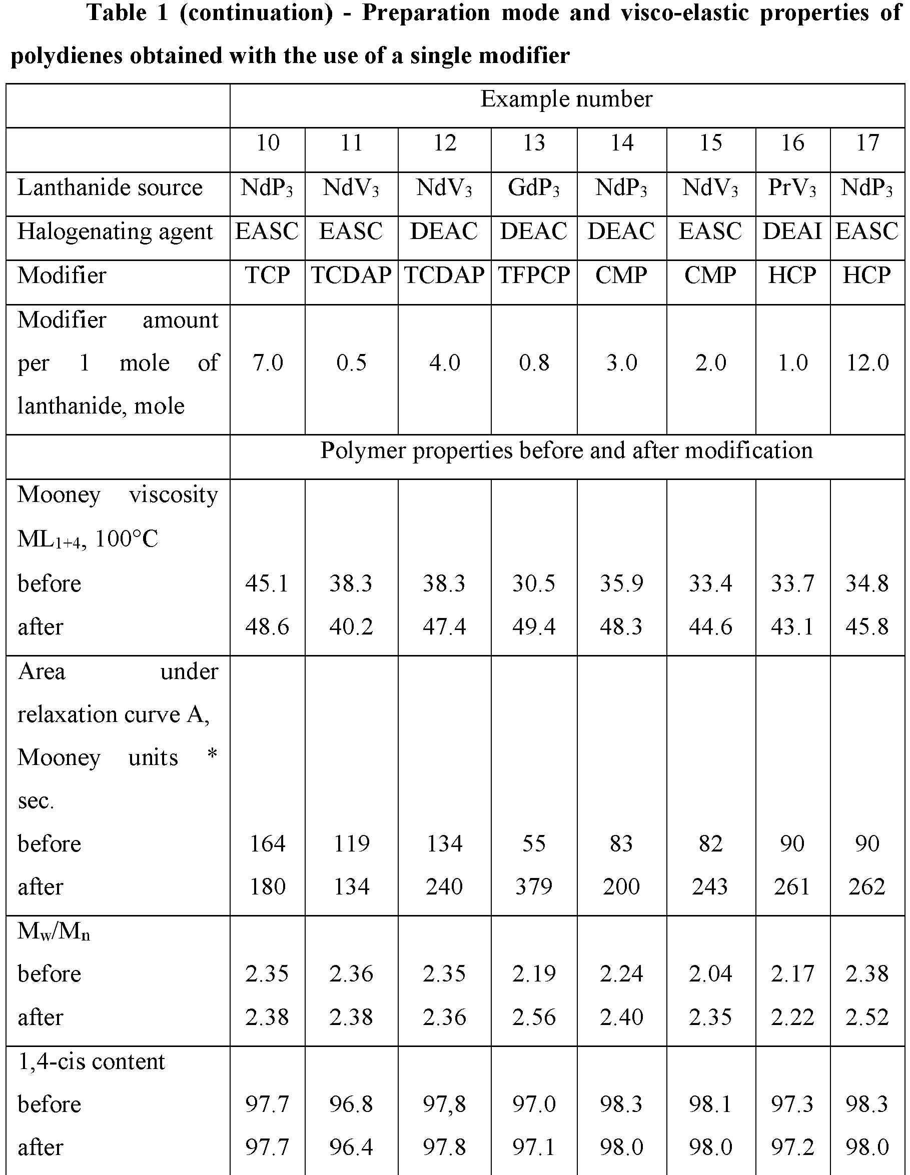

**Abbreviations used in Table 1:**
NdP₃ - tris-[bis(2-ethylhexyl)phosphate]neodymium;
NdV₃ - neodymium neodecanoate;
NdEh₃ - neodymium tris-[(2-ethyl)hexanoate];
GdV₃ - gadolinium versatate;
PrV₃ - praseodymium versatate;
GdEh₃ - gadolinium tris-[(2-ethyl)hexanoate];
NdNph₃ - neodymium naphthenate;
DEAI - diethylaluminium iodide;
DEAC - diethylaluminium chloride;
EASC - ethylaluminium sesquichloride;
HCP - 2,2,4,4,6,6-hexachloro-1,3,5-triaza-2,4,6-triphosphinine;
TCP - 2,4,6-trichloro-2,4,6-triphenoxycyclotriphosphazene;
DPP - 1,1-diphenyl-3,3,5,5-tetramethylaminotriphosphonitrile;
CMP - 2,2,4,4-tetrachloro-6,6-dimethylmercaptocyclotriphosphazatriene;
EPFP - ethyloxypentafluorocyclotriphosphazene;
TFPCP - (trifluoroetoxy)pentachlorocyclotriphosphazene;
HFP - hexafluorocyclotriphosphazene;
TCDAP - 4,4,6,6-tetrachloro-1,3,5,-triaza-2,4,6-triphosphocyclohexa-1,3,5-trien-2,2-diamine;
TCDPP - 2,4,6,6-tetrachloro-1,3,5-triaza-2,4-diphenoxytriphosphazene;
OCTP - 2,2,4,4,6,6,8,8-octachloro-1,3,5,8-tetraaza-2,4,6,8-tetraphosphinine

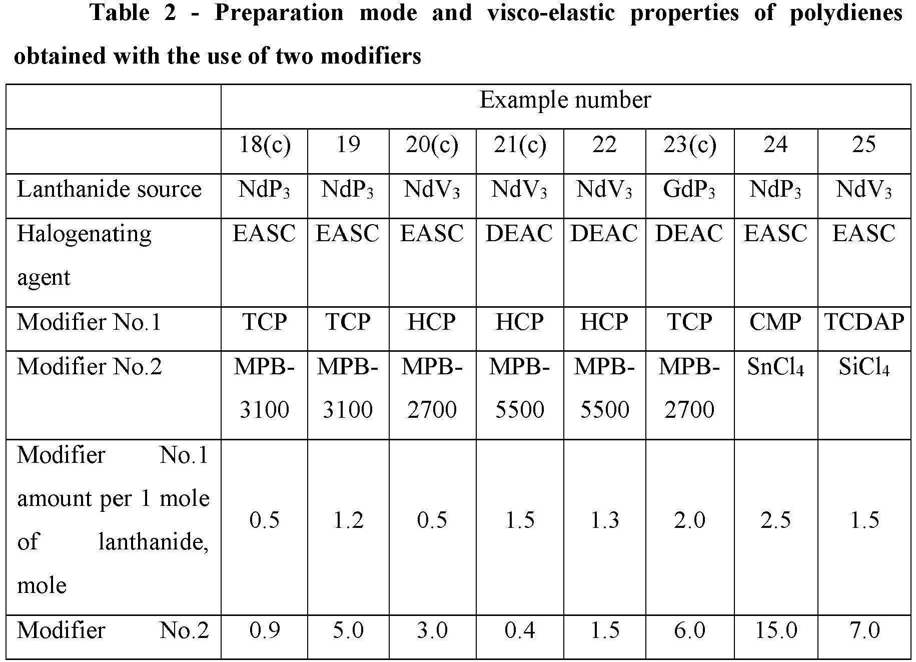

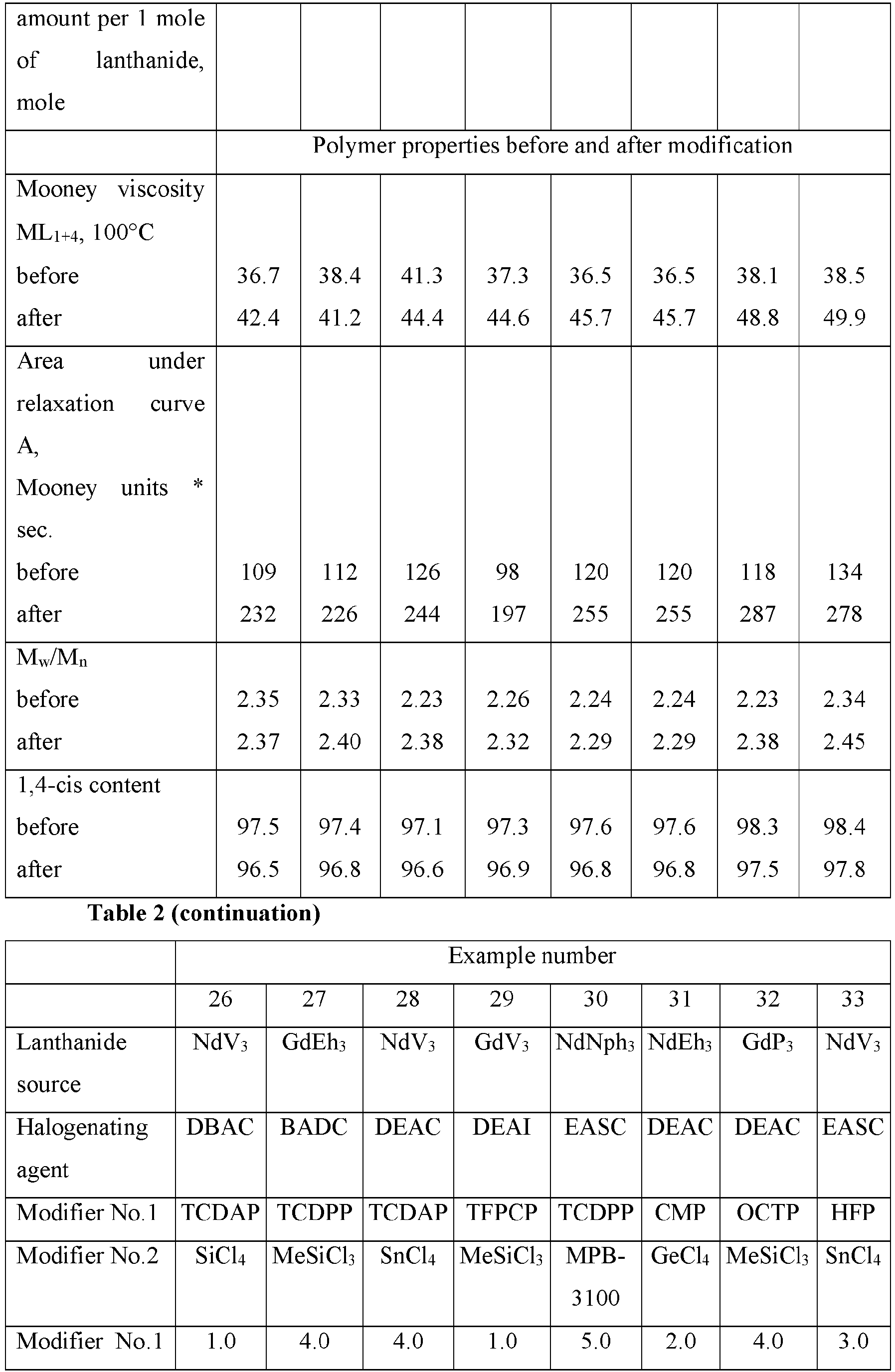

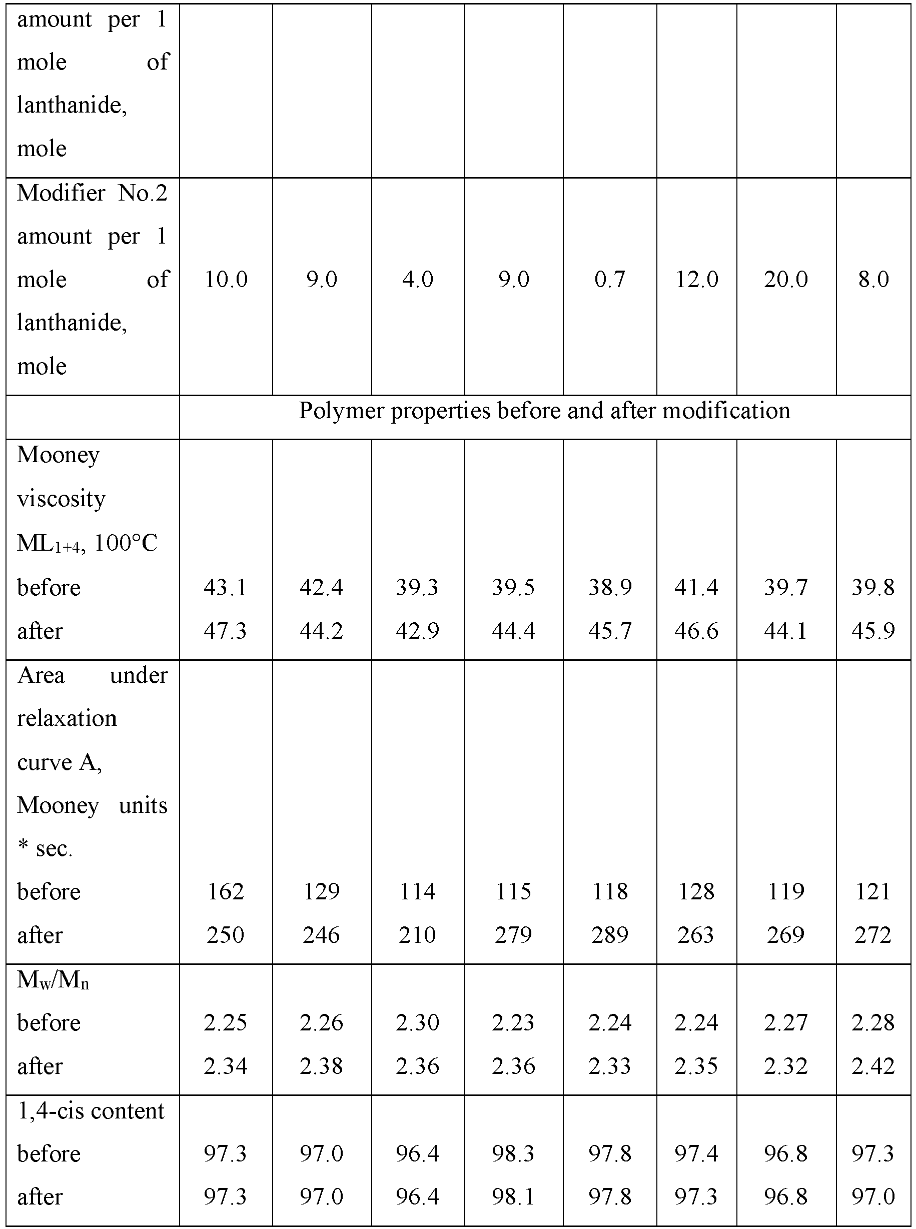

**Table 3 - Composition of rubber compounds (ASTM)**

| Ingredient | Weight parts |
|---|---|
| Butadiene rubber | 100.0 |
| Carbon black N330 (IRB 8) | 60.0 |
| Zinc white | 3.0 |
| Stearic acid, commercial grade | 2.0 |
| Naphthenic oil | 15.0 |
| Gas sulfur | 1.5 |
| Sulfenamide T | 0.9 |
| Total: | 182.40 |

**Table 4 - Rubber properties**

| Parameter | Sample code (example number) | | | | | | | | |
|---|---|---|---|---|---|---|---|---|---|
| | 1 | 3 | 9 | 10 | 17 | 18 | 19 | 21 | 23 |
| Mooney viscosity ML₁₊₄ (100°C) of the rubber compound | 81.6 | 72.9 | 63.7 | 64.9 | 78.4 | 64.8 | 65.3 | 63.1 | 65.5 |
| Area under relaxation curve A, Mooney units ^{∗} sec | 1090 | 821 | 583 | 804 | 852 | 703 | 732 | 680 | 717 |
| Payne effect ΔG' = G'_{1,4%}-G'_{50%}, kPa | 187 | 138 | 138 | 110 | 129 | 145 | 141 | 132 | 138 |
| Wearability, mm³ | 27 | 26 | 25 | 25 | 25 | 26 | 25 | 25 | 25 |
| Elastic- hysteresis property: tg δ [RPA 2000: 60°C, 10 Hz, 10%] | 0,165 | 0,156 | 0,150 | 0,155 | 0,166 | 0,170 | 0,163 | 0,162 | 0,162 |

As can be seen from the data presented in Tables 1 and 2, the polymers obtained by the method according to the invention are characterized by a narrow molecular weight distribution and a high content of 1,4-cis units.

From the data presented in Table 4 it is clear that rubbers based on polydienes according to the invention have improved processability (as evidenced by low Mooney viscosity values), good elastic-hysteresis properties, and low wearability, which helps to increase the service life of automobile tires.

## Claims

1. A method for producing a modified polydiene by catalytic polymerization of a conjugated diene in an organic solvent, wherein a catalytic system used in the polymerization includes a lanthanide compound, an organoaluminum compound, a conjugated diene, and a halogen-containing component, and wherein subsequent post-polymerization modification is carried out using at least one phosphorus-nitrogen compound the chemical structure of which is based on repeating (-P=N-)ₙ units, where n is an integer from 3 to 24, taken in an amount of at least 0.5 mole per 1 mole of lanthanide.

2. Method according to claim 1, wherein at least one co-modifier is additionally used in the step of post-polymerization modification.

3. Method according to claim 1 or claim 2, wherein the phosphorus-nitrogen compound is used in an amount of from 0.5 to 15.0 mole per 1 mole of lanthanide.

4. Method according to any one of claims 1 to 3, wherein the phosphorus-nitrogen compound is used in an amount of from 1.0 to 10.0 mole per 1 mole of lanthanide.

5. Method according to any one of claims 1 to 4, wherein the phosphorus-nitrogen compound is used in an amount of from 1.0 to 5.0 mole per 1 mole of lanthanide.

6. Method according to any one of claims 1 to 5, wherein n is an integer from 3 to 10, most preferably 3 or 4.

7. Method according to any one of claims 1 to 6, wherein the phosphorus-nitrogen compound is selected from the group consisting of:
2,2,4,4,6,6-hexachloro-1,3,5-triaza-2,4,6-triphosphinine;
2,4,6-trichloro-2,4,6-triphenoxycyclotriphosphazene;
1,1-diphenyl-3,3,5,5-tetramethylaminotriphosphonitrile;
2,2,4,4-tetrachloro-6,6-dimethylmercaptocyclotriphosphazatriene;
ethyloxypentafluorocyclotriphosphazene;
(trifluoroetoxy)pentachlorocyclotriphosphazene;
hexafluorocyclotriphosphazene;
4,4,6,6-tetrachloro-1,3,5-triaza-2,4,6-triphosphocyclohexa-1,3,5-trien-2,2-diamine;
2,4,6-trichloro-2,4,6-trifluoro-1,3,5-triaza-2λ5,4λ5,6λ5-triphosphacyclohexa-1,3,5-triene;
2,4,6-trichloro-2,4,6-tri(phenoxy)-1,3,5-triphosphinine;
trinitride diamide tetrachloride trichloride;
octachlorocyclotetraphosphazene;
1,1-dimethyl-3,3,5,5-tetrachlorocyclotriphosphazene;
2,2,4,4-tetrachloro-6-isopropyl-2λ5,4λ5,6λ5-[1,3,5,2,4,6]triazatriphosphinine;
1-methyl-1,3,3,5,5 -pentachlorocyclotriphosphazene;
1,3,5,2,4,6-triazatriphosphinine;
2,4,6-tribromo-2,4,6-trifluoropolymeric dialdehyde;
4,6-difluoro-2-N,N-2,2-N'2-N',4-N,4-N,N-6,6-N-octamethyl-1,3,5-triaza-2λ5,4λ5,6λ5-triphospha-cyclohexa-1,3,5-trien-2,2,4,6-tetramine;
2,2,4,4,6,6-hexahydro-2,2,4,4,6,6-hexapropoxy-1,2,3,4,5,6-triazatriphosphinine;
1,1-diphenyl-3,3,5,5-tetramethylaminotriphosphonitrile
and mixtures thereof,
preferably, the phosphorus-nitrogen compound is selected from the group consisting of 2,2,4,4,6,6-hexachloro-1,3,5-triaza-2,4,6-triphosphinine, 2,4,6-trichloro-2,4,6-triphenoxycyclo triphosphazene, 1,1-diphenyl-3,3,5,5-tetramethylaminotriphosphonitrile, 2,2,4,4-tetrachloro-6,6-dimethylmercaptocyclotriphosphazatriene, ethyloxypentafluorocyclotriphosphazene, (trifluoroetoxy)pentachlorocyclotriphosphazene, hexafluorocyclotriphosphazene, 4,4,6,6-tetrachloro-1,3,5,-triaza-2,4,6-triphosphocyclohexa-1,3,5-trien-2,2-diamine, 2,4,6,6,-tetrachloro-1,3,5-triaza-2,4,6-trifluoroocyclohexa-2,4-diphenoxytriphosphazene, (trifluoroetoxy)pentachlorocyclo triphosphazene, 2,2,4,4,6,6,8,8-octachloro-1,3,5,8-tetraaza-2,4,6,8-tetraphosphinine, 2,4,6,6-tetrachloro-1,3,5-triaza-2,4-diphenoxytriphosphazene, 2,2,4,4,6,6,8,8-octachloro-1,3,5,8-tetraaza-2,4,6,8-tetraphosphinine and mixtures thereof.

8. Method according to any one of claims 1 or 6, wherein the phosphorus-nitrogen compound is selected from the group consisting of chlorine-containing phosphazenes containing from 2 to 8 chlorine atoms and having molecular weight from 250 to 500 g/mole.

9. Method according to any one of claims 1 to 8, wherein the phosphorus-nitrogen compound is used in an amount of at least 0.5 mole per 1 mole of lanthanide, preferably in an amount of from 0.5 to 15.0 mole per 1 mole of lanthanide.

10. Method according to any one of claims 1 to 9, wherein the lanthanide compound is selected from compounds containing at least one lanthanide atom, chosen from the group consisting of lanthanum, neodymium, cerium, praseodymium, promethium, samarium, europium, gadolinium, terbium, dysprosium, holmium, erbium, thulium, ytterbium, lutetium, preferably the lanthanide compound is selected from neodymium, gadolinium or praseodymium compounds, particularly preferably the lanthanide compound is selected from neodymium compounds.

11. Method according to any one of claims 1 to 10, wherein the lanthanide compound is selected from carboxylates, organophosphates, organophosphonates, organophosphinates, carbamates, dithiocarbamates, xanthates, β-diketonates, halides, oxyhalides or alcoholates.

12. Method according to any one of claims 1 to 11, wherein the lanthanide compound is selected from the group consisting of neodymium tris[bis(2-ethylhexyl)phosphate], neodymium neodecanoate, neodymium tris-[(2-ethyl)hexanoate], gadolinium versatate and praseodymium versatate.

13. Method according to any one of claims 1 to 12, wherein the total modification time is from 5 minutes to 4 hours, preferably from 20 minutes to 1 hour.

14. Method according to any one of claims 1 to 13, wherein the modification is carried out at a temperature between 60°C and 90°C.

15. Method according to any one of claims 1 to 14, wherein the organoaluminum compound is selected from the group consisting of trialkylaluminum, triphenylaluminum, dialkylaluminum hydrides, alkylaluminum dihydrides and mixtures thereof, preferably the organoaluminum compound is selected from the group consisting of trimethylaluminium, triethylaluminium, tri-n-propylaluminium, triisopropylaluminium, tri-n-buthylaluminium, triisobuthylaluminium, tri-tert-buthylaluminium, triphenylaluminium, trihexylaluminium, tricyclohexylaluminium, trioctylaluminium, diethylaluminium hydride, di-n-propylaluminium hydride, di-n-buthylaluminium hydride, diisobuthylaluminium hydride, dihexylaluminium hydride, diisohexylaluminium hydride, dioctylaluminium hydride, diisooctylaluminium hydride, phenyl ethyl aluminium hydride, phenyl-n-propylaluminium hydride, phenylisopropylaluminium hydride, phenyl-n-buthylaluminium hydride, phenylisobuthylaluminium hydride, benzylethylaluminium hydride, benzyl-n-buthylaluminium hydride, benzylisobuthylaluminium hydride, benzylisopropylaluminium hydride and mixtures thereof, more preferably the organoaluminum compound is selected from the group consisting of aluminium alkyls or alkylaluminium hydrides or mixtures thereof, particularly preferably the organoaluminum compound is selected from the group consisting of triethylaluminium, triisobuthylaluminium, diisobuthylaluminium hydride or mixtures thereof, particularly preferably the organoaluminum compound is selected from the group consisting of triethylaluminum, triisobutylaluminum, diisobutylaluminum hydride or mixtures thereof, most preferably diisobutylaluminum hydride is used as the organoaluminum compound.

16. Method according to any one of claims 1 to 15, wherein the conjugated diene is selected from the group consisting of 1,3-butadiene, isoprene, 2,3-dimethyl-1,3-butadiene, 1,3-pentadiene (piperilene), 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-buthyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene and 2-methyl-3-isopropyl-1,3-butadiene, preferably conjugated diene is selected from the group consisting of 1,3-butadiene, isoprene and piperilene, most preferably 1,3-butadiene is used as the conjugated diene.

17. Method according to any one of claims 1 to 16, wherein the halogen-containing component of the catalytic system is selected from the group consisting of dimethylaluminium chloride, diethylaluminium chloride, diisobuthylaluminium chloride, dimethylaluminium bromide, diethylaluminium bromide, diisobuthylaluminium bromide, dimethylaluminium fluoride, diethylaluminium fluoride, diisobuthylaluminium fluoride, dimethylaluminium iodide, diethylaluminium iodide, diisobuthylaluminium iodide, methylaluminium dichloride, ethylaluminium dichloride, methylaluminium dibromide, ethylaluminium dibromide, methylaluminium difluoride, ethylaluminium difluoride, methylaluminium sesquichloride, ethylaluminium sesquichloride, isobuthylaluminium sesquichloride, trimethyltin chloride, trimethyltin bromide, triethyltin chloride, triethyltin bromide, di-tert-buthyltin dichloride, di-tert-buthyltin dibromide, dibuthyltin dichloride, dibuthyltin dibromide, tributhyltin chloride and tributhyltin bromide, preferably, the halogen-containing component of the catalytic system is selected from the group consisting of ethylaluminium sesquichloride, ethylaluminium dichloride, diethylaluminium iodide and diethylaluminium chloride, most preferably the halogen-containing component of the catalytic system is selected from the group consisting of ethylaluminium sesquichloride, diethylaluminium iodide and diethylaluminium chloride.

18. Method according to any one of claims 1 to 17, wherein the organic solvent is selected from the group consisting of aliphatic hydrocarbons, alicyclic hydrocarbons, monoolefins, aromatic hydrocarbons, or mixtures thereof.

19. Method according to any one of claims 1 to 18, wherein the organic solvent is selected from the group consisting of butane, pentane, hexane, heptane, cyclopentane, cyclohexane, 1-butene, 2-butene, benzene, toluene, xylene, or mixtures thereof.

20. Method according to any one of claims 1 to 18, wherein the organic solvent is selected from the group consisting of a mixture cyclohexane/hexane and a mixture cyclohexane/nefras, in which the mixing ratio is (30-55) : (70-45), respectively.

21. Method according to any one of claims 1 to 20, wherein the molar ratio lanthanide compound : organoaluminum compound : conjugated diene : halogen-containing component in the catalytic system is 1:(8-30):(5-30):(1,5-3,0), preferably 1:(8-20):(5-20):(1,8-2,8), most preferably 1:(10-15):(10-15):(2,1-2,5).

22. A method for producing modified polydiene by catalytic polymerization of a conjugated diene in an organic solvent, wherein a catalytic system used in the polymerization includes a lanthanide compound, an organoaluminum compound, a conjugated diene, and a halogen-containing component, and wherein subsequent post-polymerization modification is carried out using at least one phosphorus-nitrogen compound the chemical structure of which is based on repeating (-P=N-)ₙ units, where n is an integer from 3 to 24, and at least one halogen-containing compound, and the molar ratio of phosphorus-nitrogen compound : halogen-containing compound: lanthanide is (1.0-5.0):(3.0-20.0): 1.

23. Method according to claim 22, wherein n is an integer from 3 to 10, most preferably 3 or 4.

24. Method according to claim 22 or claim 23, wherein the phosphorus-nitrogen compound is selected from the group consisting of:
2,2,4,4,6,6-hexachloro-1,3,5-triaza-2,4,6-triphosphinine;
2,4,6-trichloro-2,4,6-triphenoxycyclotriphosphazene;
1,1-diphenyl-3,3,5,5-tetramethylaminotriphosphonitrile;
2,2,4,4-tetrachloro-6,6-dimethylmercaptocyclotriphosphazatriene;
ethyloxypentafluorocyclotriphosphazene;
(trifluoroetoxy)pentachlorocyclotriphosphazene;
hexafluorocyclotriphosphazene;
4,4,6,6-tetrachloro-1,3,5-triaza-2,4,6-triphosphocyclohexa-1,3,5-trien-2,2-diamine;
2,4,6-trichloro-2,4,6-trifluoro-1,3,5-triaza-2λ5,4λ5,6λ5-triphosphacyclohexa-1,3,5-triene;
2,4,6-trichloro-2,4,6-tri(phenoxy)-1,3,5-triphosphinine;
trinitride diamide tetrachloride trichloride;
octachlorocyclotetraphosphazene;
1,1-dimethyl-3,3,5,5-tetrachlorocyclotriphosphazene;
2,2,4,4-tetrachloro-6-isopropyl-2λ5,4λ5,6λ5-[1,3,5,2,4,6]triazatriphosphinine;
1-methyl-1,3,3,5,5 -pentachlorocyclotriphosphazene;
1,3,5,2,4,6-triazatriphosphinine;
2,4,6-tribromo-2,4,6-trifluoropolymeric dialdehyde;
4,6-difluoro-2-N,N-2,2-N'2-N',4-N,4-N,N-6,6-N-octamethyl-1,3,5-triaza-2λ5,4λ5,6λ5-triphospha-cyclohexa-1,3,5-trien-2,2,4,6-tetramine;
2,2,4,4,6,6-hexahydro-2,2,4,4,6,6-hexapropoxy-1,2,3,4,5,6-triazatriphosphinine;
1,1-diphenyl-3,3,5,5-tetramethylaminotriphosphonitrile
and mixtures thereof,
preferably, the phosphorus-nitrogen compound is selected from the group consisting of 2,2,4,4,6,6-hexachloro-1,3,5-triaza-2,4,6-triphosphinine, 2,4,6-trichloro-2,4,6-triphenoxycyclo triphosphazene, 1,1-diphenyl-3,3,5,5-tetramethylaminotriphosphonitrile, 2,2,4,4-tetrachloro-6,6-dimethylmercaptocyclotriphosphazatriene, ethyloxypentafluorocyclotriphosphazene, (trifluoroetoxy)pentachlorocyclotriphosphazene, hexafluorocyclotriphosphazene, 4,4,6,6-tetrachloro-1,3,5,-triaza-2,4,6-triphosphocyclohexa-1,3,5-trien-2,2-diamine, 2,4,6,6,-tetrachloro-1,3,5-triaza-2,4,6-trifluoroocyclohexa-2,4-diphenoxytriphosphazene, (trifluoroetoxy)pentachlorocyclo triphosphazene, 2,2,4,4,6,6,8,8-octachloro-1,3,5,8-tetraaza-2,4,6,8-tetraphosphinine, 2,4,6,6-tetrachloro-1,3,5-triaza-2,4-diphenoxytriphosphazene, 2,2,4,4,6,6,8,8-octachloro-1,3,5,8-tetraaza-2,4,6,8-tetraphosphinine and mixtures thereof.

25. Method according to any one of claims 22 to 24, wherein the phosphorus-nitrogen compound is selected from the group consisting of chlorine-containing phosphazenes containing from 2 to 8 chlorine atoms and having molecular weight from 250 to 500 g/mole.

26. Method according to any one of claims 22 to 25, wherein the phosphorus-nitrogen compound is used in an amount of at least 1.0 mole per 1 mole of lanthanide, preferably in an amount of from 1.0 to 5.0 mole per 1 mole of lanthanide.

27. Method according to claim 22, wherein molar ratio phosphazene : halogen-containing compound (expressed in halogen): lanthanide preferably is (1.0-5.0):(4.0-15.0):1, most preferably (1.0-5.0):(5.0-10.0):1.

28. Method according to any one of claims 22 to 27, wherein the lanthanide compound is selected from compounds including at least one lanthanide atom from the group consisting of lanthanum, neodymium, cerium, praseodymium, promethium, samarium, europium, gadolinium, terbium, dysprosium, holmium, erbium, thulium, ytterbium, lutetium, preferably the lanthanide compound is selected from neodymium, gadolinium or praseodymium compounds, particularly preferably the lanthanide compound is selected from neodymium compounds.

29. Method according to any one of claims 22 to 28, wherein the lanthanide compound is selected from carboxylates, organophosphates, organophosphonates, organophosphinates, carbamates, dithiocarbamates, xanthates, β-diketonates, halides, oxyhalides or alcoholates.

30. Method according to any one of claims 22 to 29, wherein the lanthanide compound is selected from the group consisting of neodymium tris-[bis(2-ethylhexyl)phosphate], neodymium neodecanoate, neodymium tris-[(2-ethyl)hexanoate], gadolinium versatate and praseodymium versatate.

31. Method according to any one of claims 22 to 30, wherein the total modification time is from 5 minutes to 4 hours, preferably from 20 minutes to 1 hour.

32. Method according to any one of claims 22 to 31, wherein the modification is carried out at a temperature between 60°C and 90°C.

33. Method according to any one of claims 22 to 32, wherein the organoaluminum compound is selected from the group consisting of trialkylaluminum, triphenylaluminum, dialkylaluminum hydrides, alkylaluminum dihydrides and mixtures thereof, preferably the organoaluminum compound is selected from the group consisting of trimethylaluminium, triethylaluminium, tri-n-propylaluminium, triisopropylaluminium, tri-n-buthylaluminium, triisobuthylaluminium, tri-tert-buthylaluminium, triphenylaluminium, trihexylaluminium, tricyclohexylaluminium, trioctylaluminium, diethylaluminium hydride, di-n-propylaluminium hydride, di-n-buthylaluminium hydride, diisobuthylaluminium hydride, dihexylaluminium hydride, diisohexylaluminium hydride, dioctylaluminium hydride, diisooctylaluminium hydride, phenyl ethyl aluminium hydride, phenyl-n-propylaluminium hydride, phenylisopropylaluminium hydride, phenyl-n-buthylaluminium hydride, phenylisobuthylaluminium hydride, benzylethylaluminium hydride, benzyl-n-buthylaluminium hydride, benzylisobuthylaluminium hydride, benzylisopropylaluminium hydride and mixtures thereof, more preferably the organoaluminum compound is selected from the group consisting of aluminium alkyls or alkylaluminium hydrides and mixtures thereof, particularly preferably the organoaluminum compound is selected from the group consisting of triethylaluminium, triisobuthylaluminium, diisobuthylaluminium hydride or mixtures thereof, most preferably diisobutylaluminum hydride is used as the organoaluminum compound.

34. Method according to any one of claims 22 to 33, wherein the conjugated diene is selected from the group consisting of 1,3-butadiene, isoprene, 2,3-dimethyl-1,3-butadiene, 1,3-pentadiene (piperilene), 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-buthyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene and 2-methyl-3-isopropyl-1,3-butadiene, preferably the conjugated diene is selected from the group consisting of 1,3-butadiene, isoprene and piperilene, most preferably 1,3-butadiene is used as conjugated diene.

35. Method according to any one of claims 22 to 34, wherein the halogen-containing component of the catalytic system is selected from the group consisting of dimethylaluminium chloride, diethylaluminium chloride, diisobuthylaluminium chloride, dimethylaluminium bromide, diethylaluminium bromide, diisobuthylaluminium bromide, dimethylaluminium fluoride, diethylaluminium fluoride, diisobuthylaluminium fluoride, dimethylaluminium iodide, diethylaluminium iodide, diisobuthylaluminium iodide, methylaluminium dichloride, ethylaluminium dichloride, methylaluminium dibromide, ethylaluminium dibromide, methylaluminium difluoride, ethylaluminium difluoride, methylaluminium sesquichloride, ethylaluminium sesquichloride, isobuthylaluminium sesquichloride, trimethyltin chloride, trimethyltin bromide, triethyltin chloride, triethyltin bromide, di-tert-buthyltin dichloride, di-tert-buthyltin dibromide, dibuthyltin dichloride, dibuthyltin dibromide, tributhyltin chloride and tributhyltin bromide, preferably the halogen-containing component of the catalytic system is selected from the group consisting of ethylaluminium sesquichloride, ethylaluminium dichloride, diethylaluminium iodide and diethylaluminium chloride, most preferably the halogen-containing component of the catalytic system is selected from the group consisting of ethylaluminium sesquichloride, diethylaluminium iodide and diethylaluminium chloride.

36. Method according to any one of claims 22 to 35, wherein the halogen-containing compounds used in the step of post-polymerization modification are selected from the group consisting of compounds of formula ElR₄₋ₙHalₙ, where n = 2-4, El represents tin, silicon or germanium, R is methyl, ethyl, propyl, butyl, isopropyl, isobutyl, tert-butyl, phenyl or allyl, Hal is fluorine, chlorine, bromine, iodine, and of sulfur or phosphorus halides; preferably the halogen-containing compounds used in the step of post-polymerization modification are selected from the group consisting of compounds of formula ElR₄₋ₙHalₙ, where n = 2-4, El represents tin or silicon, R is methyl, ethyl, propyl, butyl, isopropyl, isobutyl, tert-butyl, phenyl or allyl, or mixtures thereof; more preferably the halogen-containing compound used in the step of post-polymerization modification represents tin tetrachloride, methyltin trichloride, ethyltin trichloride, buthyltin trichloride, silicon tetrachloride, germanium tetrachloride, trichloromethyl silane, dichlormethyl silane, trichlorethylsilane or dichloroethylsilane, most preferably the halogen-containing compound in the step of post-polymerization modification is tin tetrachloride, methyltin trichloride, silicon tetrachloride, germanium tetrachloride or trichloromethylsilane.

37. Method according to any one of claims 22 to 36, wherein the modification using said at least one phosphorus-nitrogen compound and at least one halogen-containing compound is carried out either sequentially or simultaneously, or in parallel with preliminary dividing the polymerizate obtained at the polymerization step into two parts, in one of which a halogen-containing compound is added, and in the other one a phosphorus-nitrogen compound is added, followed by mixing together these parts after modification.

38. Method according to claim 37, wherein the sequential polymerization is carried out by adding to the polymerizate obtained in the polymerization step one of the agents selected from the group consisting of said at least one phosphorus-nitrogen compound and said at least one halogen-containing compound, stirring the resulting mixture for a time period from 5 minutes to 2 hours at 60-90°C, followed by the addition of another agent from the mentioned group to the resulting mixture, the mixture thus obtained being stirred during the time period between 5 minutes and 2 hours at 60-90°C.

39. Method according to claim 37, wherein the parallel modification is carried out by dividing the polymerizate obtained in the polymerization step into two parts, in one of which said at least one phosphorus-nitrogen compound is added and in the other one said halogen-containing compound is added, stirring each mixture thus obtained for time period from 5 minutes to 2 hours at 60-90°C, followed by stirring the mixtures thus obtained together for 15 to 60 minutes at 60-90°C.

40. Method according to any one of claims 22 to 39, wherein the organic solvent is selected from the group consisting of aliphatic hydrocarbons, alicyclic hydrocarbons, monoolefins, aromatic hydrocarbons, or mixtures thereof.

41. Method according to any one of claims 22 to 40, wherein the organic solvent is selected from the group consisting of butane, pentane, hexane, heptane, cyclopentane, cyclohexane, 1-butene, 2-butene, benzene, toluene, xylene, or mixtures thereof.

42. Method according to any one of claims 22 to 41, wherein the organic solvent is selected from the group consisting of a mixture of cyclohexane and hexane and a mixture of cyclohexane and nefras, the mixing ratio being (30-55) (70-45), respectively.

43. Method according to any one of claims 22 to 42, wherein in the catalytic system the molar ratio lanthanide compound : organoaluminum compound : conjugated diene : halogen-containing component is 1:(8-30):(5-30):(1,5-3,0), preferably 1:(8-20):(5-20):(1,8-2,8), most preferably 1:(10-15):(10-15):(2,1-2,5).

44. The method for producing modified polydiene by polymerization of conjugated diene in an organic solvent, wherein a catalytic system used in the polymerization includes a lanthanide compound, an organoaluminum compound, a conjugated diene, and a halogen-containing component, and wherein subsequent post-polymerization modification is carried out using at least one phosphorus-nitrogen compound the chemical structure of which is based on repeating (-P=N-)ₙ units, where n is an integer from 3 to 24, and at least one low molecular weight maleinized polybutadiene at a molar ratio phosphazene : maleinized polybutadiene : lanthanide equal to (1,0-5,0):(0,5-5,0):1.

45. Method according to claim 44, wherein n is an integer from 3 to 10, most preferably 3 or 4.

46. Method according to claim 44 or claim 45, wherein the phosphorus-nitrogen compound is selected from the group consisting of:
2,2,4,4,6,6-hexachloro-1,3,5-triaza-2,4,6-triphosphinine;
2,4,6-trichloro-2,4,6-triphenoxycyclotriphosphazene;
1,1-diphenyl-3,3,5,5-tetramethylaminotriphosphonitrile;
2,2,4,4-tetrachloro-6,6-dimethylmercaptocyclotriphosphazatriene;
ethyloxypentafluorocyclotriphosphazene;
(trifluoroetoxy)pentachlorocyclotriphosphazene;
hexafluorocyclotriphosphazene;
4,4,6,6-tetrachloro-1,3,5-triaza-2,4,6-triphosphocyclohexa-1,3,5-trien-2,2-diamine;
2,4,6-trichloro-2,4,6-trifluoro-1,3,5-triaza-2λ5,4λ5,6λ5-triphosphacyclohexa-1,3,5-triene;
2,4,6-trichloro-2,4,6-tri(phenoxy)-1,3,5-triphosphinine;
trinitride diamide tetrachloride trichloride;
octachlorocyclotetraphosphazene;
1,1-dimethyl-3,3,5,5-tetrachlorocyclotriphosphazene;
2,2,4,4-tetrachloro-6-isopropyl-2λ5,4λ5,6λ5-[1,3,5,2,4,6]triazatriphosphinine;
1-methyl-1,3,3, 5, 5 -pentachlorocyclotriphosphazene;
1,3,5,2,4,6-triazatriphosphinine;
2,4,6-tribromo-2,4,6-trifluoropolymeric dialdehyde;
4,6-difluoro-2-N,N-2,2-N'2-N',4-N,4-N,N-6,6-N-octamethyl-1,3,5-triaza-2λ5,4λ5,6λ5-triphospha-cyclohexa-1,3,5-trien-2,2,4,6-tetramine;
2,2,4,4,6,6-hexahydro-2,2,4,4,6,6-hexapropoxy-1,2,3,4,5,6-triazatriphosphinine;
1,1-diphenyl-3,3,5,5-tetramethylaminotriphosphonitrile
and mixtures thereof,
preferably, the phosphorus-nitrogen compound is selected from the group consisting of 2,2,4,4,6,6-hexachloro-1,3,5-triaza-2,4,6-triphosphinine, 2,4,6-trichloro-2,4,6-triphenoxycyclo triphosphazene, 1,1-diphenyl-3,3,5,5-tetramethylaminotriphosphonitrile, 2,2,4,4-tetrachloro-6,6-dimethylmercaptocyclotriphosphazatriene, ethyloxypentafluorocyclotriphosphazene, (trifluoroetoxy)pentachlorocyclotriphosphazene, hexafluorocyclotriphosphazene, 4,4,6,6-tetrachloro-1,3,5,-triaza-2,4,6-triphosphocyclohexa-1,3,5-trien-2,2-diamine, 2,4,6,6,-tetrachloro-1,3,5-triaza-2,4,6-trifluoroocyclohexa-2,4-diphenoxytriphosphazene, (trifluoroetoxy)pentachlorocyclo triphosphazene, 2,2,4,4,6,6,8,8-octachloro-1,3,5,8-tetraaza-2,4,6,8-tetraphosphinine, 2,4,6,6-tetrachloro-1,3,5-triaza-2,4-diphenoxytriphosphazene, 2,2,4,4,6,6,8,8-octachloro-1,3,5,8-tetraaza-2,4,6,8-tetraphosphinine and mixtures thereof.

47. Method according to any one of claims 44 to 46, wherein the phosphorus-nitrogen compound is selected from the group consisting of chlorine-containing phosphazenes containing from 2 to 8 chlorine atoms and having molecular weight from 250 to 500 g/mole.

48. Method according to any one of claims 44 to 47, wherein the phosphorus-nitrogen compound is used in an amount of at least 1.0 mole per 1 mole of lanthanide, preferably in an amount of from 1.0 to 5.0 mole per 1 mole of lanthanide.

49. Method according to claim 44, wherein the molar ratio phosphazene : maleinized polybutadiene : lanthanide is preferably (1.0-5.0):(0.5-2):1, in the most preferred embodiment being (1,0-5,0):(0,5-1,0):1.

50. Method according to any one of claims 44 to 49, wherein the lanthanide compound is selected from compounds containing at least one lanthanide atom, chosen from the group consisting of lanthanum, neodymium, cerium, praseodymium, promethium, samarium, europium, gadolinium, terbium, dysprosium, holmium, erbium, thulium, ytterbium, lutetium, preferably the lanthanide compound is selected from neodymium, gadolinium or praseodymium compounds, particularly preferably the lanthanide compound is selected from neodymium compounds.

51. Method according to any one of claims 44 to 50, wherein the lanthanide compound is selected from carboxylates, organophosphates, organophosphonates, organophosphinates, carbamates, dithiocarbamates, xanthates, β-diketonates, halides, oxyhalides or alcoholates.

52. Method according to any one of claims 44 to 51, wherein the lanthanide compound is selected from the group consisting of neodymium tris[bis(2-ethylhexyl)phosphate], neodymium neodecanoate, neodymium tris-[(2-ethyl)hexanoate], gadolinium versatate and praseodymium versatate.

53. Method according to any one of claims 44 to 52, wherein the total modification time is from 5 minutes to 4 hours, preferably from 20 minutes to 1 hour.

54. Method according to any one of claims 44 to 53, wherein the modification is carried out at a temperature between 60°C and 90°C.

55. Method according to any one of claims 44 to 54, wherein the organoaluminum compound is selected from the group consisting of trialkylaluminum, triphenylaluminum, dialkylaluminum hydrides, alkylaluminum dihydrides and mixtures thereof, preferably the organoaluminum compound is selected from the group consisting of trimethylaluminium, triethylaluminium, tri-n-propylaluminium, triisopropylaluminium, tri-n-buthylaluminium, triisobuthylaluminium, tri-tert-buthylaluminium, triphenylaluminium, trihexylaluminium, tricyclohexylaluminium, trioctylaluminium, diethylaluminium hydride, di-n-propylaluminium hydride, di-n-buthylaluminium hydride, diisobuthylaluminium hydride, dihexylaluminium hydride, diisohexylaluminium hydride, dioctylaluminium hydride, diisooctylaluminium hydride, phenyl ethyl aluminium hydride, phenyl-n-propylaluminium hydride, phenylisopropylaluminium hydride, phenyl-n-buthylaluminium hydride, phenylisobuthylaluminium hydride, benzylethylaluminium hydride, benzyl-n-buthylaluminium hydride, benzylisobuthylaluminium hydride, benzylisopropylaluminium hydride and mixtures thereof, more preferably the organoaluminum compound is selected from the group consisting of aluminium alkyls or alkylaluminium hydrides or mixtures thereof, particularly preferably the organoaluminum compound is selected from the group consisting of triethylaluminium, triisobuthylaluminium, diisobuthylaluminium hydride or mixtures thereof, most preferably diisobutylaluminum hydride is used as the organoaluminum compound.

56. Method according to any one of claims 44 to 55, wherein the conjugated diene is selected from the group consisting of 1,3-butadiene, isoprene, 2,3-dimethyl-1,3-butadiene, 1,3-pentadiene (piperilene), 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-buthyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene and 2-methyl-3-isopropyl-1,3-butadiene, preferably the conjugated diene is selected from the group consisting of 1,3-butadiene, isoprene and piperilene, most preferably 1,3-butadiene is used as conjugated diene.

57. Method according to any one of claims 44 to 56, wherein the halogen-containing component of the catalytic system is selected from the group consisting of dimethylaluminium chloride, diethylaluminium chloride, diisobuthylaluminium chloride, dimethylaluminium bromide, diethylaluminium bromide, diisobuthylaluminium bromide, dimethylaluminium fluoride, diethylaluminium fluoride, diisobuthylaluminium fluoride, dimethylaluminium iodide, diethylaluminium iodide, diisobuthylaluminium iodide, methylaluminium dichloride, ethylaluminium dichloride, methylaluminium dibromide, ethylaluminium dibromide, methylaluminium difluoride, ethylaluminium difluoride, methylaluminium sesquichloride, ethylaluminium sesquichloride, isobuthylaluminium sesquichloride, trimethyltin chloride, trimethyltin bromide, triethyltin chloride, triethyltin bromide, di-tert-buthyltin dichloride, di-tert-buthyltin dibromide, dibuthyltin dichloride, dibuthyltin dibromide, tributhyltin chloride and tributhyltin bromide, preferably the halogen-containing component of the catalytic system is selected from the group consisting of ethylaluminium sesquichloride, ethylaluminium dichloride, diethylaluminium iodide and diethylaluminium chloride, most preferably the halogen-containing component of the catalytic system is selected from the group consisting of ethylaluminium sesquichloride, diethylaluminium iodide and diethylaluminium chloride.

58. Method according to any one of claims 44 to 57, wherein the low molecular weight maleinized polybutadiene, used in the step of post-polymerization modification represents an adduct of maleic anhydride and polybutadiene containing from 4 to 24 wt.% anhydride groups, preferably from 4 to 20 wt.%, particularly preferably from 5 to 13 wt.% anhydride groups, based on the total weight of the maleinized polybutadiene, and has a molecular weight from 1200 to 15000 g/mole, preferably from 1200 to 8000 g/mole, most preferably from 2500 to 5500 g/mole.

59. Method according to any one of claims 44 to 58, wherein the modification using said at least one phosphorus-nitrogen compound and at least one maleinized polybutadiene is performed either sequentially, or simultaneously or in parallel with the preliminary dividing the polymerizate obtained in the polymerization step in two parts, in one of which maleinized polybutadiene is added, and in the other one the phosphorus-nitrogen compound is added, followed by mixing these both parts together after modification.

60. Method according to claim 59, wherein the sequential polymerization is carried out by adding to the polymerizate obtained in the polymerization step, one of the agents selected from the group consisting of said at least one phosphorus-nitrogen compound and said at least maleinized polybutadiene, stirring the resulting mixture for a time period from 5 minutes to 2 hours at 60-90°C, followed by the addition of another agent from the mentioned group to the resulting mixture, the mixture thus obtained being stirred during the time period between 5 minutes and 2 hours at 60-90°C.

61. Method according to claim 59, wherein the parallel modification is carried out by dividing the polymerizate obtained in the polymerization step into two parts, in one of which said at least one phosphorus-nitrogen compound is added, and in the other one said maleinized polybutadiene is added, stirring each of the mixtures thus obtained for a time period from 5 minutes to 2 hours at 60-90°C, followed by combining the mixtures thus obtained with each other and stirring for 15 to 60 min at 60-90°C.

62. Method according to any one of claims 44 to 61, wherein the organic solvent is selected from the group consisting of aliphatic hydrocarbons, alicyclic hydrocarbons, monoolefins, aromatic hydrocarbons, or mixtures thereof.

63. Method according to any one of claims 44 to 62, wherein the organic solvent is selected from the group consisting of butane, pentane, hexane, heptane, cyclopentane, cyclohexane, 1-butene, 2-butene, benzene, toluene, xylene, or mixtures thereof.

64. Method according to any one of claims 44 to 62, wherein the organic solvent is selected from the group consisting of a mixture of cyclohexane and hexane and a mixture of cyclohexane and nefras, the mixing ratio being (30-55) (70-45), respectively.

65. Modified polydiene, obtained by the method according to claims 1 to 64.

66. Modified polydiene according to claim 65, containing terminal groups (-P=N-)ₙ at the ends of polymer chains, where n is an integer from 3 to 24.

67. Rubber compounds based on polydiene according to claim 65 or 66.
